# EUROPEAN PATENT APPLICATION

(11) **EP 1 717 766 A1**
(43) Date of publication of application: **02.11.2006**
(21) Application number: 05103431.2
(22) Date of filing: 27.04.2005
(51) Int. Cl.: G07F 7/08

(54) **Card kit, card system and validation method**

(71) Applicant: Hewlett-Packard Development Company, L.P., Houston, TX 77070 (US)
(72) Inventor: Bosch Sole, Joan, 08174, Sant Cugat del Valles Barcelona (ES)
(74) Representative: Durville, Guillaume

(57) **Abstract**

A card assembly comprising a card, a first support and a second support, the first support supporting a first piece of information and the second support supporting a second piece of information, the first support being destroyable and the first support covering at least partially the second support so that the second piece of information is fully accessible only after destroying the first support.

## Description

The present invention relates to a card carrying valuable information.

Such cards may be used for a variety of applications including for example gift certificates as disclosed in WO 01/75723 or mobile phone prepaid cards as disclosed in WO 01/99062.

WO 01/75723 discloses a gift certificate carrying a piece of information in the form of a subset of a position coding pattern which requires reading with a dedicated user unit. The result of reading the position coding pattern is transmitted to a server which checks the validity of the piece of information in order to validate the gift certificate.

WO 01/99062 discloses a prepaid scratch card for recharging a mobile phone whereby a code is revealed by scratching the card, the code being thereafter inputted in the telephone to be checked by the network operator using the telecommunication network, in order to validate the card.

Typically, such cards carry a piece of information which is either concealed at the moment of purchase of the card and may be revealed in order to validate and use the card, or is invisible to the human eye and requires special equipment to be revealed. It should be noted that the piece of information may vary in nature, including a number as in WO 01/99062 or a piece of digital pattern as in WO 01/75723, but in any case the validation procedure implies a connection via a telecommunication network in order to check the validity of the piece of information.

The object of the invention is to avoid the need or the use of a telecommunication network in validating such cards.

This object is achieved in a kit according to claim 1, a card assembly according to claim 6 or a method according to claim 13. It should be noted that the invention primarily relies in all its aspects on the fact that two pieces of information, being the first and the second piece of information, are involved. Putting the invention into practice allows extending the use of cards carrying valuable information to areas or applications where a communication network is not accessible, or, when such communication network is available, reduce the use of such communication network.

In its first main aspect, the invention relates to a kit which allows to put the invention into practice, the kit comprising a card assembly, means of inputting information as well as means of relating pieces of information whereby the card assembly is supporting a first piece of information and a second piece of information and whereby the first piece of information is related to the second piece of information.

This first aspect relates to a card assembly. It should be understood that the card assembly could come in a variety of formats, such as a credit card format for example, or in a variety of materials including paper, plastic resins, laminated structures, cardboard or a mixture of these.

This first aspect also relates to means of inputting information. Such means are typically dependent on the type of information concerned. The following examples may be considered: in case of use of information in the alphanumerical form, the means of inputting information may consist in a keyboard; in case of use of information in the bar code form, the means of inputting information may consist in a bar code reader; in case of use of information in digital pattern form, the means of inputting information may consist in an optical sensor such as a digital pen. In a further embodiment, the means of inputting information may consist in a magnetic sensor, in particular in the case where the information would be magnetic in nature.

The first aspect also relates to means of relating pieces of information. Such means can take various forms. This may include a simple table form, which may simply be available in a printed form, displaying two columns put side to side, each column corresponding to either one of the first or the second piece of information, whereby related pieces of information would be displayed in the same row. Indeed, in a preferred embodiment, the first and second pieces of information are related by a relationship, the relationship being memorized in a table. Other forms include a table structure which would be kept in an electronic form in a memory. Indeed, in a preferred embodiment, the means of relating pieces of information comprise a processor and a memory. In such a case, the first and second pieces of information may also be related by an algorithm. In another preferred embodiment, the first and second pieces of information consist in position coding digital pattern, each piece of digital pattern corresponding to a set of coordinates in the digital pattern space, a relationship being predefined between the coordinate corresponding to the first piece of information and the coordinate corresponding to the second piece of information. In an even more preferred embodiment, the first and the second pieces of information may simply be equal, equality being the relationship between the first and the second piece of information according to the invention.

In its second main aspect, the invention relates to a card assembly comprising a card, a first support and a second support, the first support supporting a first piece of information and the second support supporting a second piece of information, the first support being destroyable and the first support covering at least partially the second support so that the second piece of information is fully accessible only after destroying the first support.

This second aspect relates to a particular type of card assembly, which is most preferably included in the kit of the invention. It should be noted that card assemblies of other types may also be used in the kit of the invention.

This second aspect relates to a first support and a second support, the first support supporting a first piece of information and the second support supporting a second piece of information. In both cases, the support is the physical substrate on which the information is provided. The support may be of various formats and made of a variety of materials. In a preferred embodiment, the second support is the card itself. In another preferred embodiment, the first support is scratchable. By scratchable it should be understood that the support may be removed by scratching with a sharp object such as a coin or a fingernail. Such scratchable supports are typically used in the field of gaming or of pre-paid cards.

In any case, according to the second aspect of the invention, the first support is destroyable. By destroyable it should be understood that the first support may be destroyed for example by scratching, dissolving, brushing out or tearing apart.

In a preferred embodiment of the invention, the destruction of the first support involves scratching the first support.

According to the second aspect of the invention, the first support is destroyable and the first support is covering at least partially the second support so that the second piece of information is fully accessible only after destroying the first support. This consists in a security measure whereby the card may not be reused in so far as the first piece information cannot be accessed after accessing the second piece of information. This of course implies that the user of the card will somehow record for input or directly input the first piece of information before accessing the second. Direct input is a preferred option and can take place using an optical sensor according to a preferred embodiment of the invention. It is possible that the first piece of information be readable by the user directly, as would for example be the case if the first piece of information consists in an alphanumerical formula, in which case the user could remember it or write it down for input, but it is preferred that the first piece of information is not directly readable by the user in order to avoid undesired re-use of the card. A non reusable card is indeed a preferred embodiment. In any case, once the first piece of information has been inputted or recorded for input, the first support is to be destroyed in order to access the second piece of information. Again this second piece of information may be recorded or directly inputted by the user.

The necessity to destroy the first support in order to access the second piece of information allows preventing re-use of the card. This is of particular interest if the card is for example of the "pre-paid" type, or of the "gift voucher" type, whereby the re-use of the card is not meant to take place.

In order to reinforce this security measure, most preferred is a card assembly whereby the first piece of information is not readable by a human eye. In this case, the user needs to input the first piece of information before destroying the first support as the user has no straight forward means at his disposal to record the first piece of information. It should be noted that, in a further preferred embodiment, the first piece of information cannot be photocopied. This may be achieved for example using an ink which has a wave length outside of the wave length standard spectrum visible by a photocopier, i.e. using an "invisible" ink such as an infrared ink. This may also be achieved by encrypting information using a resolution higher than the standard resolution of a photocopier. An example would be the use of a digital pattern formed of dots having a mean diameter comprised between 10 and 150 micrometers. It should be noted that there is no expectation that absolute protection against counterfeiting may be achieved. Counterfeiting may however result expensive or technically difficult when using such measures.

In a preferred embodiment, the first piece of information is a bar code or a digital pattern. An advantage of such forms of information is that it is not directly recordable by a user the way alphanumerical information would be, which means that in normal use the information will be lost once the first support is destroyed. This of course implies that the user will input the information before destroying the first support. Bar codes are commonly used and will therefore not be described in details. Digital patterns are however less commonly used. A digital pattern is essentially a graphical manner of encoding digital information on paper.

In a preferred embodiment, the digital pattern used is a position-coding pattern as disclosed in WO01/75723, or a digital pattern of the type represented in Figure 1, whereby a sheet of digital paper 100 has a position identifying pattern 102 made up of a number of dots 104 arranged on an imaginary grid 106. The grid 106 can be considered as being made up of horizontal and vertical lines 108, 110 defining a number of intersections 112 where they cross. The intersections 112 are of the order of 0.3 mm apart. One dot 114 is provided at each intersection 112, but offset slightly in one of four possible directions up, down, left or right, from the actual intersection 112. The dot offsets, which are typically about 50µm from the notional centre of the crossing grid "lines", are arranged to vary in a systematic way so that any group of a sufficient number of dots 104, for example any group of 36 dots arranged in a six by six square, will be unique within a very large area of the pattern. This large area is defined as a total imaginary pattern space, and only a small part of the pattern space is taken up by the pattern on the sheet 100. By allocating a known area of the pattern space to the sheet 100, for example by means of a co-ordinate reference, the document and any position on the patterned parts of it can be identified from the pattern printed on it. An example of this type of pattern is described in WO 01/26033. It will be appreciated that other position identifying, or location, patterns can equally be used. Some examples of other suitable patterns are described in WO 00/73983 and WO 01/71643. When applying position-coding digital patterns to the invention, the information would represent a particular absolute position in the whole digital pattern space.

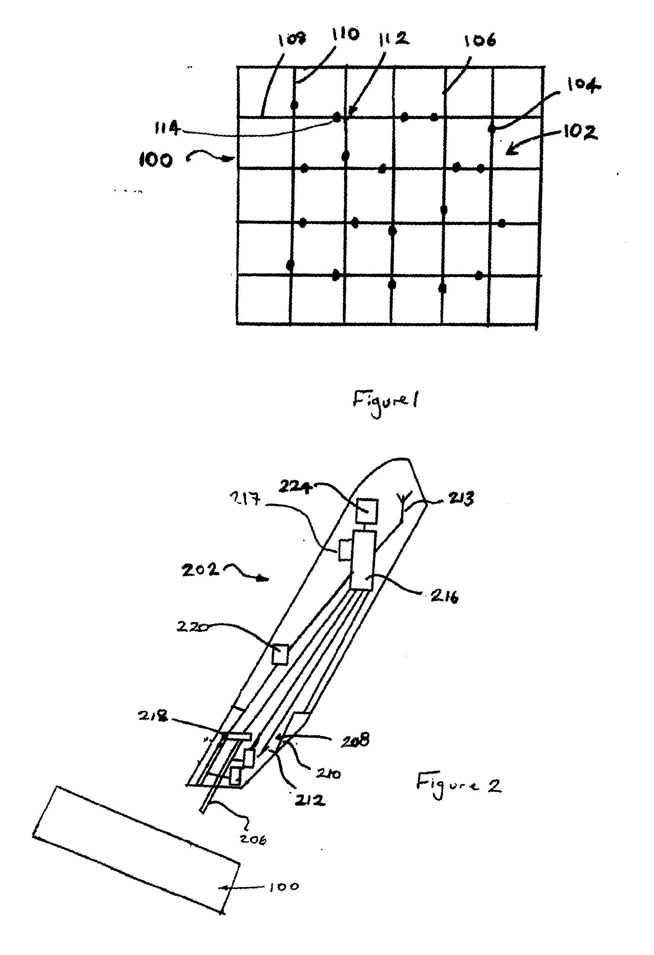

When using such a pattern or another pattern, it is preferred to use a pen as represented in Figure 2 as means of inputting information. The pen 202 comprises a writing stylus 206, and a camera 208 made up of an infra red (IR) LED 210, an IR sensor 212 and a wireless transmitter 213. The camera 208 is arranged to image an area adjacent to a tip of the pen stylus 206 and to capture images of the position identifying pattern. A processor 216 processes images from the camera 208. A pressure sensor 218 detects when the stylus 206 is in contact with the paper 100 and triggers operation of the camera 208. Whenever the pen 202 is being used on a patterned area of the paper 100, the processor 216 can therefore determine from the pattern 102 the position of the tip of the stylus 206 of the pen 202 whenever it is in contact with the paper 100 (whenever the camera 208 can see the pattern 102). From this can be determined the position and shape of any marks or strokes made on the patterned areas of the paper 100. The processing of pen position with time to establish what marks or strokes have been made on the paper can take place in the pen, or in an off-pen computer. The pen movement information is stored in a short term memory 220, for example RAM (Random Access Memory) in the pen 202 as it is being used. The pen 202 also has a clock 217 which provides a time associated with position-identifying signals from the camera 208, or alternatively associated with position-identifying signals post processing by the processor 216. The data that is stored in memory 220 has a timestamp associated with it so that the pen's position with time is determinable. When the user has finished scanning the support, the encoded information is inputted in the pen and data may be transferred from the short term memory to a protected long term memory 224 where the data is stored sequentially in order of arrival. This protected long term memory 224 is prevented from being over written until an explicit instruction to allow this is received from the processor 216. The data in the short term memory 220 is cleared once the data from the short term memory 220 is transferred to the long term memory 224 thereby enabling the pen 202 to be used with another piece of physical media, such as for example to read the second piece of information if the second piece of information is of the digital pattern type.

As a further preferred embodiment the second piece of information is of the same nature as the first piece of information. An advantage of such a configuration is that the same means of inputting information may be used. In an other embodiment whereby the first piece of information is of a nature different from the second piece of information, the means of inputting information may need to be different but this would be an improvement as far as security is concerned.

It should be noted that the invention may be extended to embodiments comprising more pieces of information than the first and second pieces of information, each piece of information being related to the others, in order to obtain particularly secure executions. Examples include the addition of a third piece of information on a third support, the third piece of information being related to the other two.

Such a multiple layer structure may be assimilated to a programming language. A device could indeed be regarded as a state machine. In every state the user could have several types of functionality enabled: fully functional, read-only, send all data to host. Different types of cards could be provided for the same device. Each card would change the behaviour of the device over time. A first card may for example be issued allowing a blood-gas analyzer to perform ten analysis, and to then send all data to a host. Another card may allow the analyzer to perform analysis for some time, and after that allow read-only mode only.

Binary data may also be encoded in the card of the invention. A device may be programmed by importing a Java class, this class being encoded in a card assembly according to the invention. Because the data may only be processed sequentially (like a CPU does), tempering with the device would be more difficult. In analogy with a programming language, forks may be implemented by requiring use of a different card. For instance, in the case of the blood-gas analyzer, if no valid result was obtained, another card for repeating the analysis may be required, instead of using another card for sending the data to the host.

In its third main aspect, the invention relates to a method comprising the following steps:
- providing a first piece of information on a first support; and
- input the first piece of information into means of relating pieces of information; and
- destroy the first support, in order to access a second piece of information; and
- input the second piece of information into the means of relating pieces of information; and
- proceed with validation if the first and second pieces of information are related to each other.

It should be noted that the features of the preferred embodiments of the various main aspects of the invention of the invention may be combined to lead to specific embodiments of the invention. In particular, the method of the third aspect is best put into practice by providing the card assembly or the kit of the invention. Indeed, in a preferred embodiment, the method further includes the step of providing a card, the card carrying the first and the second piece of information.

The validation method of the invention may be included in a large variety of processes which require validation by the user, and most preferably non-reusable validation, such as in gift voucher or pre-paid mobile phone or prepaid calling card applications. The crediting action required by such processes may be triggered using the validation method of the invention without the need to access a network. It is indeed sufficient to check the relationship between the first and second pieces of information using a table or an algorithm for example.

The validation method of the invention is preferably a part of a method of unlocking an object. In a preferred embodiment, the object is a digital pen. In an even preferred embodiment, the first and second pieces of information are readable by the digital pen.

The validation method of the invention is preferably part of a method of limiting the use of an object including the following steps:
provide a locked object; and
unlock the object following an unlocking method including the validation method of
the invention; and
increment a counter; and
lock the object once the counter has reached a preset value.

The counter may count a variety of values including time, time of use or quantity of use of the object. Examples include an object such as a mobile phone, whereby the counter could either count the money or the units spent. Another example is the example of the digital pen, where the counter may count the time of use or the potential use time, or the number of pages or words written. By time of use should be understood the time of effective use of the pen, whereas the time of potential use would be related to the absolute time, such as one calendar month starting from the validation date for example, without need to count the actual time of use.

More generally, the validation method of the invention may be used in the unlocking method to allow a particular user, typically the card holder, to gain access to a locked resource, in our case the object concerned. It should be noted that "object" should be construed broadly insofar as "object" may include computer software such as games for example, where the user of the card would for example unlock a game in order to start playing using the validation method or the card assembly of the invention. In this particular example, the method of limiting the use could again be applied, the counter counting the playing time. In this particular example, the invention allows replacing the use of coins in situations where a network connection does not exit, thus increasing the security of the premises offering such games in so far as the gaming machines do not physically contain coins.
The card assembly of the invention may also be used for gambling, both for spending or for paying a successful gamble to a user using a card assembly.

It should be noted that there could be more than one first support and, respectively first piece of information, associated to only one second support / second piece of information. In such a case, each combination of one of the first pieces of information with the one second piece of information could relate to a specific relationship, allowing codification of for example a variety of value available on the same card, offering a choice between 5 monetary units or 10 unitary units for example.

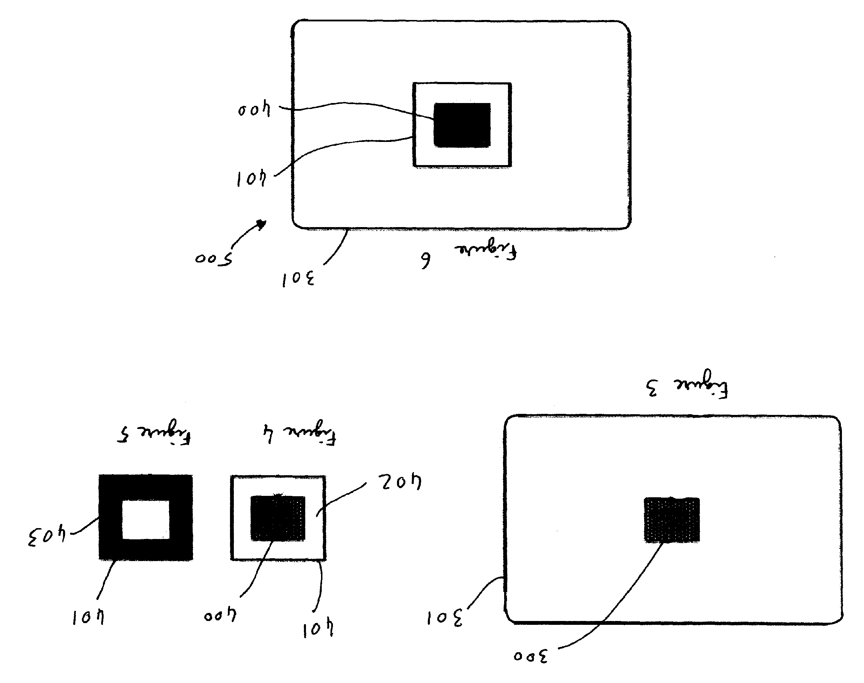

The invention is described in a detailed embodiment in conjunction with figures 1 to 5 whereby:
Figure 1 is a representation of a digital pattern used in the detailed embodiment of the invention.
Figure 2 represents a digital pen used in the detailed embodiment of the invention.
Figure 3 represents a second support according to the detailed embodiment of the invention.
Figure 4 represents the printed side of a first support according to the detailed embodiment of the invention.
Figure 5 represents the side opposite the printing side of the first support of Figure 4.
Figure 6 represents a card assembly according to the detailed embodiment of the invention.

The detailed embodiment of the invention uses digital pattern as described in Figure 1 as the form of the first and second pieces of information. The digital pattern is readable using a digital pen as represented in Figure 2. The digital pen is used as means of inputting information, whereas the means of relating pieces of information is integrated in the processor 216. Both the digital pen and the digital pattern are as described above.

In the detailed embodiment, the second piece of information 300 is printed onto a card made of stiff paper which serves as second support 301. The surface occupied by the second piece of information 300 is of 1cm x 1cm, the second piece of information being in the form of digital pattern. The second support 301 is larger than the surface occupied by the second piece of information 300, the second support 301 having a credit card format of 8.6 x 5.4 mm with rounded edges, the second piece of information being placed centered onto the card.

The first piece of information 400 is printed on a standard piece of paper which serves as first support 401. The first piece of information 400 occupies a surface of 1cm x 1cm. The first support itself has a surface of 1.4cm x 1.4cm leaving a 0.2 cm margin 402 around the first piece of information 400. The first piece of information 400 takes the form of digital pattern

The first support 401 is glued onto the second support, the glue 403 being applied on the 0.2 cm margin 402 on the side of the first support which is opposite the printed side of the first support, in such a way that the first support 401 completely recovers the area of the second support on which the second piece of information 300 is printed, so that when the first support 401 is stuck on the second support 301 there is preferably no glue coming in contact with the second piece of information.

When a user wishes to use the card assembly 500 of the detailed embodiment, the user first should input the first piece of information 400 using the digital pen 202, then remove the first support 401 to access the second piece of information 300, then input the second piece of information 300 using the digital pen 202. Once both pieces of information 300 and 400 are inputted, the relationship between the two pieces of information is established by the processor 116. Once the relationship between the two pieces of information has been validated, the digital pen 202 is automatically unlocked for operation, a counter being incremented to count one hour. Once the hour passed, the digital pen is locked again. The process is repeated using another card.

It should be noted that a time-out may be implemented. A time-out would consist in triggering a countdown at the moment of inputting the first piece of information, whereby the second piece of information would need to be inputted before the end of the countdown. Such a time-out would improve the security of use.

It should be noted that a partial card assembly with a preprinted second piece of information may be available, whereby a user may produce a related first piece of information on a first support on demand, for example using his printer, the first piece of information being generated for example using an extra piece of information already provided on the partial card assembly, the extra piece of information permitting creation of the desired first piece of information. Complete card assemblies may then be generated on demand. A possible use may include purchase of one or more partial card assemblies, in order to use them later on demand, for example by entering the web page of the users bank, requesting a download of for example 10 monetary units from the account of the user to be transferred on the completed card assembly, the bank providing the appropriate first piece of information to the printer, the complete card assembly being used normally thereafter.

## Claims

1. A kit comprising a card assembly, means of inputting information as well as means of relating pieces of information whereby:
- the card assembly is carrying a first piece of information and a second piece of information
- the first piece of information is related to the second piece of information.

2. A kit according to claim 1, whereby the means of inputting information is an optical sensor such as a digital pen or a bar code reader.

3. A kit according to any of claims 1 or 2, whereby the means of relating pieces of information comprise a processor and a memory.

4. A kit according to any of claims 1 to 3 whereby the first and second pieces of information are related by a relationship, the relationship being memorized in a table.

5. A kit according to any of claims 1 to 4 whereby the first and second pieces of information are related by an algorithm.

6. A card assembly comprising a card, a first support and a second support, the first support supporting a first piece of information and the second support supporting a second piece of information, the first support being destroyable and the first support covering at least partially the second support so that the second piece of information is fully accessible only after destroying the first support.

7. A card assembly according to claim 6, whereby the second support is the card itself.

8. A card assembly according to any of claims 6 to 7, whereby the first piece of information is not readable by a human eye.

9. A card assembly according to any of claims 6 to 8, whereby the first piece of information is a bar code or a digital pattern.

10. A card assembly according to any of claims 6 to 9, whereby the first piece of information cannot be photocopied.

11. A card assembly according to any of claims 6 to 10, whereby the second piece of information is of the same nature as the first piece of information.

12. A card assembly according to any of claims 6 to 11, whereby the first support is scratchable.

13. A validation method comprising the following steps:
- providing a first piece of information on a first support; and
- input the first piece of information into means of relating pieces of information; and
- destroy the first support, in order to access a second piece of information; and
- input the second piece of information into the means of relating pieces of information; and
- proceed with validation if the first and second pieces of information are related to each other.

14. A validation method according to claim 13, whereby the method further includes the step of providing a card, the card carrying the first and the second piece of information.

15. A validation method according to claim 14, whereby the destruction of the first support involves scratching the first support.

16. A method of unlocking an object using the validation method according to any of claims 13 to 15.

17. A method of unlocking an object according to claim 15, whereby the object is a digital pen.

18. A method of unlocking an object according to claim 17, whereby the first and second pieces of information are readable by the digital pen.

19. A method of limiting the use of an object including the following steps:
- provide a locked object; and
- unlock the object following the method according to any of claims 16 to 18; and
- increment a counter; and
- lock the object once the counter has reached a preset value.
